# EUROPÄISCHE PATENTSCHRIFT

(11) **EP 3 867 110 B1**
(45) Veröffentlichungstag und Bekanntmachung des Hinweises auf die Patenterteilung: **25.10.2023**
(21) Anmeldenummer: 19779882.0
(22) Anmeldetag: 30.09.2019
(51) Int. Cl.: B60S 1/48, B60S 1/54, B60S 1/56, B05B 1/00, B05B 1/16, B08B 5/02, B05B 7/08, B05B 12/06

(54) **REINIGUNGSVORRICHTUNG, DRUCKLUFTSYSTEM, FAHRZEUG UND REINIGUNGSVERFAHREN**
CLEANING DEVICE, COMPRESSED-AIR SYSTEM, VEHICLE AND CLEANING METHOD
DISPOSITIF DE NETTOYAGE, SYSTÈME D'AIR COMPRIMÉ, VÉHICULE ET PROCÉDÉ DE NETTOYAGE

(30) Priorität: 19.10.2018 DE 102018126091
(43) Veröffentlichungstag der Anmeldung: 25.08.2021
(73) Patentinhaber: ZF CV Systems Europe BV, 1170 Brussels (BE)
(72) Erfinder: FIEBRANDT, Jan, 31812 Bad Pyrmont (DE); WESTERKAMP, Helge, 30966 Hemmingen (DE)
(74) Vertreter: Rabe, Dirk-Heinrich
(86) Internationale Anmeldenummer: PCT/EP2019/076406
(87) Internationale Veröffentlichungsnummer: WO 2020/078703

(56) Entgegenhaltungen:
- CA-C- 2 139 402
- US-A1- 2018 290 632
- US-B2- 9 180 840

## Beschreibung

Die Erfindung betrifft eine Reinigungsvorrichtung zum selektiven Beaufschlagen einer Oberfläche mit einem ersten Medium, aufweisend: einen Hochdruckspeicher ausgebildet zum Speichern des unter einem Speicherdruck, insbesondere unter Hochdruck, stehenden ersten Mediums, eine Impulsdüse, ausgebildet zum impulsartigen Beaufschlagen der Oberfläche mit dem unter dem Speicherdruck ersten Medium und ein Schaltventil.

Eine eingangs beschriebene Reinigungsvorrichtung ist in DE10 2015 013203 A1 offenbart. Diese beschreibt eine Reinigungseinheit für eine zur Umgebungserfassung vorgesehene Bilderfassungseinheit eines Fahrzeugs, mit zumindest einer Wischwasserdüse, die dazu vorgesehen ist, Wischwasser auf eine transparente Abdeckfläche der Bilderfassungseinheit zu sprühen, mit zumindest einem Wischer, der dazu vorgesehen ist, die Abdeckfläche der Bilderfassungseinheit mechanisch zu trocknen, und mit zumindest einer Druckluftdüse, die dazu vorgesehen ist, die Abdeckfläche der Bilderfassungseinheit mit Druckluft zu beaufschlagen.

Das Konzept ist noch verbesserungswürdig, insbesondere hinsichtlich der Abhängigkeit der Reinigung von einem mechanischen Wischer.

Die US 9,707,896 B2 beschreibt ein Sichtsystem für ein Fahrzeug umfassend eine Kamera mit einem Bildwandler und ein Objektiv. Die Kamera befindet sich an einem äußeren Teil eines Fahrzeugs und hat ein Sichtfeld außerhalb des Fahrzeugs. Ein Luftströmungselement weist eine Einlassöffnung und eine Auslassöffnung auf, wobei die Auslassöffnung so konfiguriert ist, dass sie den Luftstrom vor die Linse lenkt, um den Schmutz weg von der Linse zu leiten. Die Auslassöffnung ist so konfiguriert, dass sie den Luftstrom mit einer Geschwindigkeit lenkt, die größer ist als eine Luftströmungsgeschwindigkeit, die in den Einlassanschluss fließt. Die Einlassöffnung kann einen Einlassbereich aufweisen, der wesentlich größer als ein Auslassbereich des Auslassanschlusses ist. Das System kann eine Luftstromerzeugungsvorrichtung zum Erzeugen oder Verstärken des Luftstroms durch die Luftströmungsvorrichtung umfassen. Dieses Konzept realisiert somit einen Luftvorhang zum Schutz eines Sensors gegen äußere Einflüsse, und ist somit noch verbesserungswürdig, insbesondere hinsichtlich der Reinigung des Sensors. 11

Die US9180840B2 offenbart eine Kamerawaschvorrichtung mit einer Luftpumpe, einem Waschwassertank, der Waschwasser speichert, einer Sprühdüse mit einem Sprühabschnitt, einem Zusammenführungs-Anschlussstück, das eine Hochdruckluftpassage und eine Waschwasserpassage aufweist, und einem elektromagnetischen Ventil. Die Luftpumpe erzeugt und liefert Hochdruckluft zu der Hochdruckluftpassage. Wenn der Steuerteil das elektromagnetische Ventil anweist, sodass es in einen Offenzustand geschaltet wird, werden das Waschwasser und die Hochdruckluft in dem Zusammenführungs-Anschlussstück gemischt, sodass Wasserpartikel erzeugt werden. Die erzeugten Wasserpartikel werden der Sprühdüse zugeführt. Wenn das elektromagnetische Ventil nach Aufsprühen von lediglich Hochdruckluft auf ein Objektiv einer Heckkamera in den Offenzustand geschaltet wird, sprüht der Sprühabschnitt die Wasserpartikel auf das Objektiv der Kamera.

Wünschenswert ist es, eine zuverlässige und/oder gründliche Reinigung zu gewährleisten, insbesondere unter relativ geringem, insbesondere apparativen, Aufwand. Weiterhin ist ein geringer Verbrauch von Energie und Reinigungsmedien wünschenswert, sowie ein robuster, insbesondere möglichst wartungsarmer, Aufbau. Insbesondere ist ein kompakter Aufbau wünschenswert.

An dieser Stelle setzt die Erfindung an, deren Aufgabe es ist, eine verbesserte Vorrichtung und ein Reinigungsverfahren anzugeben; insbesondere ist es Aufgabe, eine Reinigungsvorrichtung anzugeben, welche wenigstens eines der oben adressierten Probleme zumindest teilweise behebt.

Insbesondere soll ein hohes Maß an Zuverlässigkeit und/oder Gründlichkeit bei der Reinigung erreicht werden; vorzugsweise gleichwohl der apparative Aufwand und/oder der Aufwand hinsichtlich Wartung einer Reinigungsvorrichtung reduziert werden. Insbesondere sollte ein relativ geringer Verbrauch von Energie und Reinigungsmedien erreicht werden. Insbesondere sollte ein kompakter Aufbau erreicht werden, insbesondere ein Aufbau, der einen relativ geringen Bauraum beansprucht und eine Montage unter relativ geringem Aufwand ermöglicht.

Die Aufgabe, betreffend die Reinigungsvorrichtung, wird durch die Erfindung mit einer Reinigungsvorrichtung des Anspruchs 1 gelöst.

Die Erfindung geht aus von einer Reinigungsvorrichtung der eingangs genannten Art zum selektiven Beaufschlagen einer Oberfläche mit einem ersten Medium, aufweisend: einen Hochdruckspeicher ausgebildet zum Speichern des unter einem Speicherdruck, insbesondere unter Hochdruck, stehenden ersten Mediums, eine Impulsdüse, ausgebildet zum impulsartigen Beaufschlagen der Oberfläche mit dem unter dem Speicherdruck ersten Medium und ein Schaltventil.

Die Erfindung geht von der Überlegung aus, dass es generell vorteilhaft ist, den Aufwand bei der Reinigung von Oberflächen, insbesondere den apparativen Aufwand und den Verbrauch von Energie und Reinigungsmedien, möglichst gering zu halten, ohne dabei jedoch die Reinigungswirkung einzuschränken. Dies trifft insbesondere auf die Reinigung von Oberflächen eines Sensors oder einer Sensorabdeckung zu, für die eine saubere Oberfläche eine Voraussetzung für die ordnungsgemäße und zuverlässige Funktionsweise des Sensors ist.

Durch das impulsartige Beaufschlagen einer solchen Oberfläche mit einem ersten Medium kann eine derartige Reinigungswirkung vorteilhaft erzielt werden. Der Begriff "impulsartig" bezeichnet im Zusammenhang der Erfindung eine plötzlich, ruckartige Beaufschlagung einer Oberfläche mit einem Medium, deren Impuls insbesondere geeignet ist, auf der Oberfläche befindliche Partikel, insbesondere Dreckpartikel, zu lösen und/oder zu entfernen. Generell wird dabei die Reinigungswirkung des Impulses beispielsweise durch eine relativ hohe Masse des Mediums und/oder eine relativ hohe Aufprallgeschwindigkeit des Mediums auf die Oberfläche und/oder ein relativ schnelles Auslösen der Beaufschlagung vorteilhaft erhöht. Ein relativ schnelles Auslösen der Beaufschlagung führt - insbesondere im Gegensatz zu einer langsam kontinuierlich ansteigenden Strömung des Mediums - zu einem Auftreffen insbesondere einer begrenzten, in einem Speicher gespeicherten Luftmasse auf die Oberfläche in einem relativ kurzen Zeitraum. Somit wird vorteilhaft ein hoher Impuls erreicht.

Erfindungsgemäß ist bei der Reinigungsvorrichtung vorgesehen, dass der Hochdruckspeicher und das Schaltventil in einem Speicherventilmodul baulich integriert sind, wobei das Schaltventil als Magnetventil ausgebildet ist, und aufweist:
einen Düsenanschluss und einen Hochdruckspeicheranschluss, ausgebildet zum selektiven Herstellen einer ersten Verbindung zwischen dem Hochdruckspeicher mit der Impulsdüse, und
einen Speiseanschluss zum Herstellen einer zweiten Verbindung des Hochdruckspeichers mit einer ersten Mediumsquelle.

Die Erfindung hat somit erkannt, dass eine bauliche Integration des Hochdruckspeichers und des Schaltventils in einem Speicherventilmodul vorteilhaft ist. Zum einen führt eine solche Integration zu einem relativ geringen Bauraum der Reinigungsvorrichtung und somit zu einer kompakten Bauweise, die insbesondere beim Einsatz in Fahrzeugen, wo es auf Bauraum- und Gewichtsersparnisse ankommt, vorteilhaft ist. Zum Anderen führt die Anordnung des Hochdruckspeichers in relativer Nähe zum Schaltventil zu einer relativ kurzen Reaktionszeit, da das im Hochdruckspeicher gehaltene erste Medium einen relativ kurzen Weg zurücklegen muss, bevor es über die Impulsdüse auf die Oberfläche geleitet wird. Auch führt eine Anordnung des Hochdruckspeichers in relativer Nähe zum Schaltventil vorteilhaft zu einem relativ geringen Verbrauch des ersten Mediums, insbesondere der Druckluft, da sich zwischen dem Hochdruckspeicher und dem Schaltventil, und insbesondere zwischen dem Hochdruckspeicher und der Impulsdüse, relativ wenig Totvolumen befindet, welches ansonsten durch das Medium aus dem Hochdruckspeicher, nach dem Schalten des Schaltventils in eine Lösestellung, überwunden werden müsste.

Erfindungsgemäß ist weiter vorgesehen, dass
das Schaltventil in einer Lösestellung die erste Verbindung zwischen dem Hochdruckspeicher und der Impulsdüse über den Versorgungsanschluss und den Düsenanschluss freigibt, und
das Schaltventil in einer Ladestellung die zweite Verbindung zwischen dem Hochdruckspeicher und der ersten Mediumsquelle über den Hochdruckspeicheranschluss, insbesondere Speiseanschluss, und den Versorgungsanschluss freigibt.

Die Erfindung hat ausgehend von dieser erfindungsgemäßen Ausbildung des Schaltventils als Magnetventil weiter erkannt, dass es vorteilhaft ist, zwischen der ersten und zweiten Verbindung zu schalten bei dem unter dem Speicherdruck stehenden Hochdruckspeicheranschluss, für ein impulsartiges Beaufschlagen dieses Mediums auf eine Oberfläche im Zusammenhang mit einer hier beschriebenen Reinigungsvorrichtung.

Erfindungsgemäß ist somit weiter vorgesehen, dass
- das Schaltventil weiter ausgebildet ist, zwischen der Lösestellung zur Freigabe der ersten Verbindung und Ladestellung zur Freigabe der zweiten Verbindung zu schalten, wobei

- der Versorgungsanschluss unter dem Speicherdruck des Hochdruckspeichers steht und/oder der Hochdruckspeicheranschluss unter dem Druck der ersten Mediumsquelle steht.

Durch den Einsatz eines direkt schaltenden Ventils wird vorteilhaft eine kurze Reaktionszeit erreicht. Dies ist im Unterschied dazu bei indirekt schaltenden Ventilen wie zum Beispiel Vorsteuerventilen weniger der Fall. Auch ist es durch ein direkt schaltendes Ventil vorteilhaft möglich, die Länge der Beaufschlagung, insbesondere die Länge eines Druckluftpulses, zeitlich genauer zu steuern, da man die Strömung des Mediums unmittelbar kontrolliert. Im Unterschied dazu ist es bei indirekt schaltenden Ventilen, wie beispielsweise bei einem Vorsteuerventil, nur mittelbar möglich, die Strömung des Mediums zu kontrollieren.

Dadurch, dass das Schaltventil als Magnetventil ausgebildet ist, wird vorteilhaft ein direktes Schalten des ersten Mediums, das insbesondere unter einem Hochdruck steht, ermöglicht. Durch das direkte Schalten kann, insbesondere im Unterschied zu einem Vorsteuerventil, die Reaktionszeit zwischen dem Schalten und dem impulsartigen Beaufschlagen vorteilhaft verkürzt werden. Durch das Bestromen einer Magnetspuleneinheit des Magnetventils wird ein Magnetkolben des Magnetventils unmittelbar bewegt, wodurch der Hochdruckspeicher relativ schnell geöffnet, und das erste Medium über die Impulsdüse schnell, das heißt impulsartig, auf die Oberfläche geleitet werden kann.

Die Erfindung führt zur Lösung der Aufgabe auch auf ein Druckluftsystem, insbesondere für ein Fahrzeug, aufweisend:
- mindestens eine Reinigungsvorrichtung gemäß dem Konzept der Erfindung, wobei
- eine erste Mediumsquelle des Druckluftsystems über eine erste Mediumszuleitung mit der mindestens einen Reinigungsvorrichtung verbindbar ist.

Beim erfindungsgemäßen Druckluftsystem werden die Vorteile der Reinigungsvorrichtung vorteilhaft genutzt.

Die Erfindung führt zur Lösung der Aufgabe auch auf ein Fahrzeug mit einem solchen Druckluftsystem.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorteilhaft wird die erste Verbindung mit dem Schaltventil gebildet und wenigstens mit einem Druckanschluss des Hochdruckspeichers, dem Versorgungsanschluss, den Düsenanschluss und einer Düsenzuleitung zur Impulsdüse. Vorteilhaft wird, zusätzlich oder alternativ, die zweite Verbindung mit dem Schaltventil gebildet und wenigstens mit einer ersten Mediumszuleitung zwischen der Mediumsquelle und dem Hochdruckspeicheranschluss, insbesondere Speiseanschluss, dem Versorgungsanschluss und einem Druckanschluss zwischen dem Versorgungsanschluss und dem Hochdruckspeicher. Diese Art der ersten und zweiten Verbindung ermöglicht eine besonders vorteilhafte Integration des Schaltventils.

Im Rahmen einer Weiterbildung ist eine Düse ausgebildet zum Beaufschlagen der Oberfläche mit einem zweiten Medium, wobei die Reinigungsvorrichtung ausgebildet ist, die Oberfläche mit einer Mediumssequenz aus mindestens einem ersten, insbesondere gasförmigen, Medium und einem zweiten, insbesondere flüssigen, Medium, zu beaufschlagen. Dies kann konkret insbesondere beinhalten, dass die Beaufschlagung einer zu reinigenden Oberfläche mit einer Mediumssequenz, insbesondere einer Abfolge von mindestens zwei intermittierend und/oder abwechselnd gesteuerten und in jeweils einem Strahl auf die Oberfläche geleiteten Medien, insbesondere in der Art einer oder mehrerer Pulse, erfolgt, was vorteilhaft zu einer relativ hohen Reinigungswirkung führt. Die Weiterbildung basiert auf der Erkenntnis, dass hierbei eine Abfolge eines Beaufschlagens mit einem Reinigungsmittel, gefolgt von einem Beaufschlagen mit einem oder mehreren Druckluftpulsen, zu einer verbesserten Reinigungswirkung führt, insbesondere verglichen mit ausschließlich auf Druckluft oder ausschließlich auf Flüssigkeit basierenden Reinigungsverfahren. Auch entsteht im Vergleich zu kontinuierlich beaufschlagenden Systemen, insbesondere ständig beaufschlagenden System wie beispielsweise Luftvorhänge der Vorteil, dass Energie und Reinigungsmedien eingespart werden können. Die Weiterbildung basiert weiter auf der Erkenntnis, dass bei einer Beaufschlagung mit einer derartigen Mediumssequenz die Reinigungswirkung mindestens ausreichend - verglichen mit anderen, insbesondere ausschließlich auf Druckluft oder ausschließlich auf Flüssigkeit basierenden Reinigungsverfahren sogar besser - sein kann, sodass insbesondere die Abhängigkeit von einem mechanischen Reinigungsgerät, wie z. B. einem Wischer oder dergleichen mit der zu reinigenden Oberfläche in Kontakt stehenden Gerät, verringert werden kann, oder sogar vollständig auf ein derartiges mechanisches Reinigungsgerät verzichtet werden kann. Hierdurch wird vorteilhaft die Anzahl bewegter und verschleißbehafteter Teile verringert und somit die Robustheit erhöht, sowie die Herstellungskosten und die Fehleranfälligkeit der Reinigungsvorrichtung verringert. Eine Mediumssequenz bezeichnet in dem Zusammenhang der Erfindung eine Abfolge von einem oder mehreren Beaufschlagungen im Rahmen eines Reinigungsvorgangs. Besonders bevorzugt weist eine Mediumssequenz eine oder mehrere, insbesondere impulsartige, Beaufschlagungen mit einem ersten Medium, insbesondere Druckluft, und eine oder mehrere Beaufschlagungen mit einem zweiten Medium, insbesondere Wasser, auf.

Im Rahmen einer Weiterbildung ist das Schaltventil als ein 3/2-Wege-Ventil ausgebildet; insbesondere weist es einen Versorgungsanschluss als den Speiseanschluss auf. Dies beinhaltet insbesondere konkret, dass die Reinigungsvorrichtung über den Versorgungsanschluss mit der ersten Mediumsquelle verbunden werden kann. Durch diese Integration des Versorgungsanschlusses in das Schaltventil wird vorteilhaft eine noch kompaktere Bauweise erreicht.

Im Rahmen einer alternativen Weiterbildung ist das Schaltventil als ein 2/2-Wege-Ventil ausgebildet. Ein 2/2-Wege-Ventil beansprucht insgesamt weniger Bauraum, als ein 3/2-Wege-Ventil. Insbesondere bei dieser aber nicht ausschließlich bei dieser Weiterbildung, ist vorgesehen, dass der Hochdruckspeicher mit der ersten Mediumsquelle über ein in Richtung der ersten Mediumsquelle sperrendes Hochdruckspeicher-Halteventil verbunden ist. Hierdurch kann, insbesondere in der Weiterbildung mit 2/2-Wege-Ventil, ein Rückströmen des unter Hochdruck stehenden ersten Mediums vom Hochdruckspeicher zur ersten Mediumsquelle verhindert werden.

Die Erfindung wird dadurch weitergebildet, dass das Schaltventil ausgebildet ist, unter dem Hochdruck, insbesondere unter dem Hochdruck stehenden Hochdruckspeicher-Anschluss, von einer Ladestellung in eine Lösestellung zu schalten. Der Hochdruck, insbesondere der Hochdruck des Hochdruckspeicher-Anschlusses, kann einen Wert aufweisen, der deutlich über dem Umgebungsdruck liegt. Beispielsweise kann der Hochdruck einen Wert von 2 bis 6 bar, vorzugsweise 3 bis 6 bar, aufweisen. Insofern ist Hochdruck im Sinne der vorliegenden Anmeldung als ein Arbeitsdruck zu verstehen, der deutlich über dem Umgebungsdruck liegt, insbesondere in einem Bereich von 2 bis 6 bar, vorzugsweise 3 bis 6 bar liegt, und deswegen als Hochdruck bezeichnet ist. Im technischen Sinne liegt der vorliegend mit "Hochdruck" bezeichnete Arbeitsdruck jedoch wesentlich im technischen Niederdruckbereich von 1 bis 5 bar bzw. reicht in den technischen Mitteldruckbereich von 5 bis 99 bar.

Die Erfindung wird dadurch weitergebildet, dass das Speicherventilmodul und/oder das Schaltventil weiter ein Zuleitungs-Rückschlagventil aufweist, ausgebildet zum Sperren einer Strömung in der Richtung vom Schaltventil zu einer ersten Mediumszuleitung. Hierdurch kann, insbesondere in einer Weiterbildung mit 3/2-Wege-Ventil, ein Rückströmen des unter Hochdruck stehenden ersten Mediums vom Hochdruckspeicher zur ersten Mediumsquelle verhindert werden.

Im Rahmen einer Weiterbildung weist der Hochdruckspeicher ein Fassungsvolumen zwischen 2 bis 10 ml auf.. Ein solches Fassungsvolumen stellt einen geeigneten Kompromiss dar zwischen einem relativ geringen Bauraum und einer ausreichenden Reinigungsleistung.

In einer Weiterbildung des Druckluftsystems weist das Druckluftsystem eine zweite Mediumsquelle auf, die über eine zweite Mediumszuleitung mit der mindestens einen Reinigungsvorrichtung verbindbar ist. In einer derartigen Weiterbildung können insbesondere Mediumssequenzen aus einem ersten Medium und einem zweiten Medium generiert werden.

In einer Weiterbildung des Druckluftsystems bzw. Fahrzeugs ist vorgesehen, dass die erste Mediumsquelle einem anderen Primärzweck dient, insbesondere der Versorgung einer Luftfederanlage oder dergleichen Pneumatikanlage. In einer derartigen Weiterbildung kann vorteilhaft eine bereits vorhandene Mediumsquelle, insbesondere Druckluftquelle, zur Versorgung der Reinigungsvorrichtung genutzt werden. Dies ist insbesondere bei einem Einsatz in einem Fahrzeug oder dergleichen mobilen System vorteilhaft, da die Anzahl der benötigten Komponenten reduziert wird und somit Gewicht, Kosten und Energie eingespart werden können.

In einer Weiterbildung des Druckluftsystems bzw. Fahrzeugs ist vorgesehen, dass die zweite Mediumsquelle einem anderen Primärzweck dient, insbesondere der Versorgung einer Scheibenreinigungsanlage oder dergleichen Reinigungsanlage. In einer derartigen Weiterbildung kann vorteilhaft eine bereits vorhandene Mediumsquelle, insbesondere Flüssigkeits- und/oder Reinigungsmittelquelle, zur Versorgung der Reinigungsvorrichtung genutzt werden. Dies ist insbesondere bei einem Einsatz in einem Fahrzeug oder dergleichen mobilen System vorteilhaft, da die Anzahl der benötigten Komponenten reduziert wird und somit Gewicht, Kosten und Energie eingespart werden können.

In einer Weiterbildung des Druckluftsystems bzw. Fahrzeugs ist vorgesehen, dass die erste Mediumsquelle eine Verdichteranordnung und/oder einen Druckluftspeicher aufweist, insbesondere die Verdichteranordnung in dem Druckluftspeicher angeordnet ist. Bei einer Anordnung der Verdichteranordnung in dem Druckluftspeicher wird insbesondere vorteilhaft eine kompakte Bauform des Druckluftsystems erreicht.

In einer Weiterbildung des Druckluftsystems ist vorgesehen, dass das Druckluftsystem mindestens ein Zuleitungs-Rückschlagventil, insbesondere in der ersten Mediumszuleitung und/oder einer ersten Quellenleitung, aufweist, In einer solchen Weiterbildung wird insbesondere vorteilhaft erreicht, dass die von einer Verdichteranordnung erzeugte Druckluft, bei Leckagen oder dergleichen zu einem Druckverlust führenden Undichtigkeiten, die sich in Förderrichtung vor dem Ventil befinden, nicht über diese Undichtigkeiten entweichen kann. Dies ist insbesondere der Fall, da mindestens eine Zuleitungs-Rückschlagventil in diese, der Förderrichtung entgegengesetzten Strömungsrichtung sperrt und somit insbesondere der Versorgungsdruck in dem Teil des Druckluftsystems, der sich in Förderrichtung hinter dem Ventil befindet, gehalten werden kann.

Die Erfindung führt zur Lösung der Aufgabe auch auf ein Reinigungsverfahren zum Reinigen einer Oberfläche, mit einer erfindungsgemäßen Reinigungsvorrichtung zum selektiven Beaufschlagen einer Oberfläche mit einer Mediumssequenz aus mindestens einem ersten, insbesondere gasförmigen, Medium und einem zweiten, insbesondere flüssigen, Medium, wobei das Verfahren die Schritte aufweist:
- Aufladen eines Hochdruckspeichers mit einem ersten Medium, insbesondere Luft;
- Halten eines Speicherdrucks im Hochdruckspeicher, insbesondere durch Schalten des Schaltventils in eine Ladestellung;
- Beaufschlagen der Oberfläche mit einem zweiten Medium, insbesondere Wasser oder einem Reinigungsmittel; und/oder
- Beaufschlagen der Oberfläche mit dem ersten Medium, insbesondere durch Schalten des Schaltventils in eine Lösestellung.

Vorteilhaft ist vorgesehen, dass das Beaufschlagen der Oberfläche mit dem zweiten Medium und das Beaufschlagen der Oberfläche mit dem ersten Medium zeitlich gesteuert, insbesondere abwechselnd und/oder intermittierend, erfolgt.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung, wie durch die Ansprüche definiert, abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein.

Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: die schematische Ansicht einer Ausführungsform einer Reinigungsvorrichtung gemäß dem Konzept der Erfindung,
- Fig. 2A - Fig.2C: eine ausschnittsweise Darstellung der Ausführungsform in drei verschiedenen Zuständen,
- Fig. 3: eine weitere ausschnittsweise Darstellung einer Reinigungsvorrichtung mit einer detaillierten Schnittdarstellung eines Ventilspeichermoduls,
- Fig. 4: die schematische Ansicht einer weiteren Ausführungsform einer Reinigungsvorrichtung, nicht Teil der Erfindung,
- Fig. 5: eine Weiterbildung eines Druckluftsystems, nicht gemäß dem Kon-zept der Erfindung,
- Fig. 6: eine schematische Darstellung eines Fahrzeugs aufweisend eine Reinigungsvorrichtung gemäß dem Konzept der Erfindung.

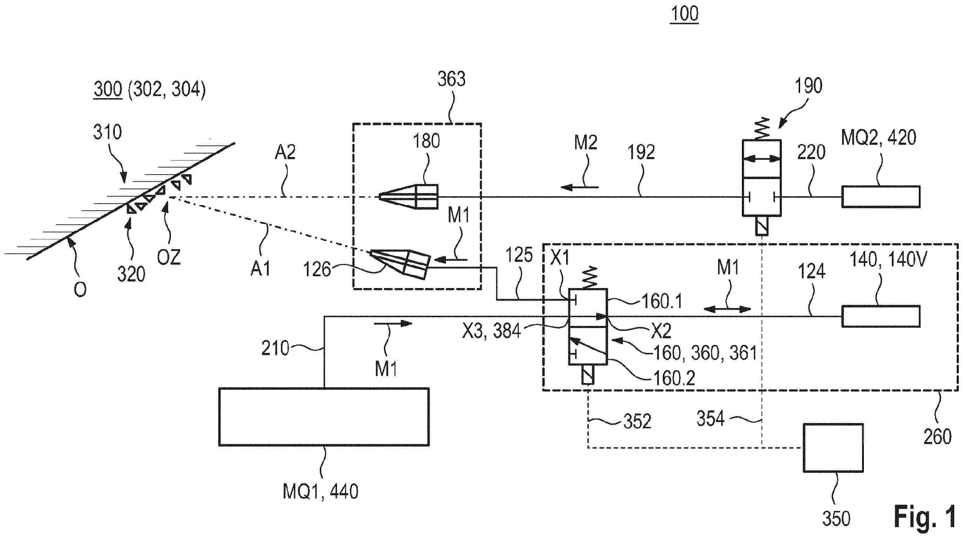

Fig. 1 zeigt die schematische Ansicht einer Ausführungsform einer Reinigungsvorrichtung 100 gemäß dem Konzept der Erfindung. Eine Düsenanordnung 363 weist eine Impulsdüse 126 und eine Düse 180 auf. Die Impulsdüse 126 ist ausgebildet, ein erstes Medium M1 entlang einer ersten Strahlachse A1 auf eine Oberfläche O eines hier lediglich ausschnittsweise dargestellten Sensors 300 zu leiten. Die Düse 180 ist ausgebildet, ein zweites Medium M2 entlang einer zweiten Strahlachse A2 auf die Oberfläche O zu leiten. Die Impulsdüse 126 und die Düse 180 sind in der Düsenanordnung 363 derart relativ zueinander ausgerichtet, dass sich die erste Strahlachse A1 und die zweite Strahlachse A2 in einem Zielbereich OZ der Oberfläche O schneiden. Diese Ausrichtung dient der Entfernung von Dreckpartikeln 320 oder dergleichen Verschmutzungen, die sich insbesondere in dem Zielbereich OZ befinden. Insbesondere kann der Sensor 300 ein hier symbolisch bezeichneter optischer Sensor 302, und insbesondere ein hier ebenfalls symbolisch bezeichneter Umgebungserfassungssensor 304 sein. Auch kann die zu reinigende Oberfläche O einer in Fig. 1 symbolisch bezeichneten Abdeckung 310 eines Sensors, insbesondere eines vorgenannten Sensors sein.

Die Düse 180 ist mit einer Zuführungsleitung 192 verbunden. Die Zuführungsleitung 192 ist weiterhin über ein zweites Schaltventil 190 trennbar mit einer zweiten Mediumszuleitung 220 zwecks Zuführung des zweiten Mediums M2 aus einer zweiten Mediumsquelle MQ2, vorliegend in Form eines Tanks 420, verbunden. Es ist auch denkbar, dass sich die erste Strahlachse A1 und die zweite Strahlachse A2 nicht schneiden, sondern an jeweils unterschiedlichen Positionen auf die Oberfläche O auftreffen, beispielsweise um unterschiedlichen Trägheitseigenschaften des ersten Mediums M1 und des zweiten Mediums M2 Rechnung zu tragen, insbesondere wenn der Bereich zwischen Reinigungsvorrichtung 100 und Oberfläche 300 Beschleunigungen, Fahrtwind, und/oder dergleichen Umgebungseinflüssen ausgesetzt ist.

Vorliegend befindet sich das als ein Magnetventil 360 ausgebildete Schaltventil 160 in einer ersten Ladestellung 160.1. Das Schaltventil 160 ist ein Magnetventil 360, das als 3/2-Wege Ventil 361 ausgebildet ist und weist einen Düsenanschluss X1, einen Hochdruckspeicheranschluss X2 und einen Versorgungsanschluss X3 auf. Der Hochdruckspeicheranschluss X2 ist dabei über einen Druckanschluss 124 mit einem Hochdruckspeicher 140 fluidführend verbunden. Das Schaltventil 160 und der Hochdruckspeicher 140 bilden vorliegend zusammen eine bauliche Einheit in Form eines Ventilspeichermoduls 260. Der Hochdruckspeicher 140 hat ein Fassungsvolumen 140V zwischen 2 bis 10 ml. Der Versorgungsanschluss X3 stellt eine Verbindung zu einer ersten Mediumsquelle MQ1 her und übernimmt somit die Funktion eines Speiseanschlusses 384 der Reinigungsvorrichtung 100.

In der Ladestellung 160.1 besteht eine fluidführende Verbindung zwischen dem Versorgungsanschluss X3 und dem Hochdruckspeicheranschluss X2.

Insbesondere erlaubt das Schaltventil 160 in dieser Ladestellung 160.1, wie durch den Pfeil dargestellt, nur eine Strömung des ersten Mediums M1 in der Richtung vom Versorgungsanschluss X3 zum Hochdruckspeicheranschluss X2, und sperrt eine Strömung in die entgegengesetzte Richtung. Dies kann beispielsweise über ein in das Schaltventil 160 integriertes Zuleitungs-Rückschlagventil 164 (hier nicht dargestellt) oder dergleichen Ventilelement realisiert werden. Der Düsenanschluss X1 ist in der Ladestellung 160.1 geschlossen. Wenn beispielsweise in dem Druckluftspeicher 440 ein Speicherdruck PS herrscht, wird dieser Speicherdruck PS in der Ladestellung 160.1 durch ein Herüberströmen des ersten Mediums M1 auch im Hochdruckspeicher 140 aufgebaut. Durch die oben beschriebene, einseitige Sperrwirkung des Schaltventils 160 in der Ladestellung 160.1 wird der aufgebaute Speicherdruck PS auch dann in dem Hochdruckspeicher 140 gehalten, wenn dieser Druck im Druckluftspeicher 440 wieder abfallen sollte. Diese einseitige Sperrwirkung des Schaltventils 160 ermöglicht auf diese Weise eine Art Kondensatorwirkung des Hochdruckspeichers 140.

Wird das Schaltventil 160 von der Ladestellung 160.1 in die Lösestellung 160.2 geschaltet, wird der Versorgungsanschluss X3 gesperrt und eine Verbindung zwischen dem Hochdruckspeicheranschluss X2 und dem Düsenanschluss X1 hergestellt.

In der Lösestellung 160.2 wird somit das im Hochdruckspeicher 140 unter dem Speicherdruck PS gehaltene erste Medium M1 über eine mit dem Düsenanschluss X1 verbundene Impulsdüsenzuleitung 125 an die Impulsdüse 126 geleitet. Die Impulsdüse 126 leitet das erste Medium M1 auf die Oberfläche O, was insbesondere zur impulsartigen Beaufschlagung der Oberfläche O führt.

Es ist besonders bevorzugt, dass das erste Medium M1 Luft ist. Luft kann aus der Atmosphäre angesaugt werden, in einem hier nicht dargestellten Verdichter 402 zu Druckluft verdichtet werden und im Hochdruckspeicher 140 gespeichert werden. Die Beaufschlagung der Oberfläche O, insbesondere die impulsartige Beaufschlagung, mit verdichteter Druckluft durch die Impulsdüse 126, führt zu einem vorteilhaften Reinigungseffekt, insbesondere zusammen mit einer einmaligen oder mehrfachen, abwechselnd oder gleichzeitigen, Beaufschlagung der Oberfläche O mit dem zweiten Medium M2 durch die Düse 180 der Düsenanordnung 363. Hierzu kann die Beaufschlagung mit dem zweiten Medium M2 über das zweite Schaltventil 190 gesteuert werden.

Durch ein hier beispielhaft gezeigtes Steuermodul 350, welches sowohl über eine erste Schaltventil-Steuerleitung 352 mit dem Schaltventil 160 als auch über eine zweite Schaltventil-Steuerleitung 354 mit dem zweiten Schaltventil 190 signalführend verbunden ist, können sowohl das erste Schaltventil 160 als auch das zweite Schaltventil 190 geöffnet oder geschlossen werden, insbesondere um in steuerbarer Weise die Oberfläche O zu beaufschlagen und/oder Mediumssequenzen zu erzeugen.

Bei einem Reinigungsverfahren zum Reinigen einer Oberfläche O mit einer im Folgenden weiter erläuterten Reinigungsvorrichtung 100, 100A-D, 100' zum selektiven Beaufschlagen einer Oberfläche O mit einer Mediumssequenz MS aus mindestens einem ersten, insbesondere gasförmigen, Medium M1 und einem zweiten, insbesondere flüssigen, Medium M2, weist das Verfahren die Schritte auf:
- Aufladen eines Hochdruckspeichers 140, 140' mit einem ersten Medium M1, insbesondere Luft M1.1;
- Halten eines Speicherdrucks PS im Hochdruckspeicher 140, 140', insbesondere durch Schalten des Schaltventils 160 in eine Ladestellung 160.1;
- Beaufschlagen der Oberfläche O mit einem zweiten Medium M2, insbesondere Wasser M2.1 oder einem Reinigungsmittel M2.2; und/oder
- Beaufschlagen der Oberfläche O mit dem ersten Medium M1, M1.1, insbesondere durch Schalten des Schaltventils 160 in eine Lösestellung 160.2.

Es ist besonders bevorzugt, dass das zweite Medium M2 gebildet ist durch Wasser M2.1 oder ein Reinigungsmittel M2.2 oder eine Mischung aus Wasser M2.1 und Reinigungsmittel M2.2. Auch kann das zweite Medium M2 vorteilhaft aus einer bereits in einem System, insbesondere einem Fahrzeug vorhandenen Mediumsquelle, entnommen werden. Eine derartige Mediumsquelle kann beispielsweise ein Tank mit Reinigungsflüssigkeit für eine Scheibenreinigungsanlage sein.

Dabei ist insbesondere vorgesehen, dass das Beaufschlagen der Oberfläche O mit dem zweiten Medium M2, M2.1, M2.2 und das Beaufschlagen der Oberfläche O mit dem ersten Medium M1, M1.1 zeitlich gesteuert, insbesondere abwechselnd und/oder intermittierend, erfolgt.

Durch eine abwechselnde Beaufschlagung der Oberfläche O mit dem ersten Medium M1 und dem zweiten Medium M2, oder einer gleichzeitigen, jedoch unabhängig voneinander intermittierenden Beaufschlagung der Oberfläche O mit dem ersten Medium M1 und dem zweiten Medium M2, kann vorteilhaft eine verbesserte Reinigungswirkung erzielt werden. Die verbesserte Reinigungswirkung entsteht insbesondere, da die Beaufschlagung mit einem, insbesondere flüssigen, zweiten Medium M2 zu einem Aufweichen von Dreckpartikeln 320 und dergleichen unerwünschten Partikeln auf der Oberfläche O führt, und ein anschließendes, insbesondere impulsartiges, Beaufschlagen mit einem, insbesondere gasförmigen, ersten Medium M1, zu einem zuverlässigen Entfernen der aufgeweichten Dreckpartikel 320 führt.

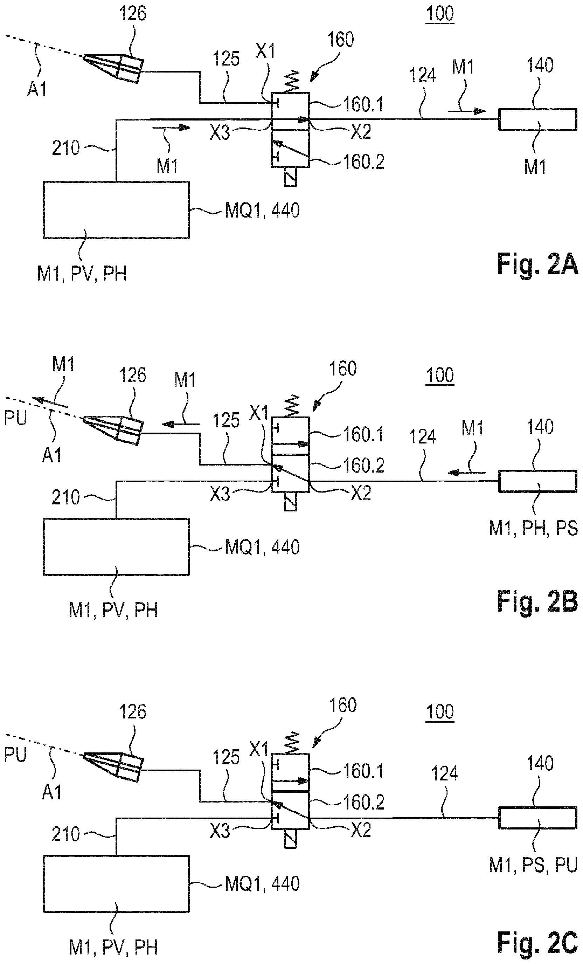

Die Fig. 2A, Fig. 2B und Fig. 2C zeigen die in Fig. 1 dargestellte Weiterbildung der Reinigungsvorrichtung 100 ausschnittsweise, und zwar in drei verschiedenen Zuständen. In dem Druckluftspeicher 440 wird das erste Medium M1 unter einem Versorgungsdruck PV gehalten, insbesondere unter einem Hochdruck PH. Dieser Hochdruck PH kann beispielsweise 3 bis 6 bar betragen, wobei Hochdruck im Sinne der vorliegenden Anmeldung als ein Arbeitsdruck zu verstehen ist, der deutlich über dem Umgebungsdruck liegt, insbesondere in einem Bereich von 2 bis 6 bar, vorzugsweise 3 bis 6 bar liegt, und deswegen als Hochdruck bezeichnet ist.

In einer bevorzugten Ergänzung oder Variante der hier gezeigten Ausführungsformen, kann die zuvor erwähnte Druckluft auch zunächst aus einer anderen hier nicht gezeigten, in einem Fahrzeug aber immer verfügbaren Druckluftquelle jeglicher Art stammen, z. B. kann als Druckluftquelle ein Drucklufterzeuger/- verdichter und/oder ein Reservoir/Hauptspeicher genutzt werden. Daraus erzeugte und/oder entnommene Druckluft könnte dann in den Druckluftspeicher 440 weitergeleitet werden. Der Druck kann beispielsweise auch vom Luftfederungsspeicher zum Speicher 440 über ein Ventil oder entsprechend auf den zuvor als Hochdruck PH bezeichneten Arbeitsdruck 3 bis 6 bar reguliert werden. Dies ist dann sinnvoll bzw. ggfs. erforderlich, da beispielsweise bei der Druckluftfederung eines Fahrzeugs der übliche Federungs-Arbeitsdruck weitaus über dem zuvor als Hochdruck bezeichneten Arbeitsdruck gemäß der Ausführungsform liegt, also vor allem deutlich über 3 bis 6 bar liegt. Der Druckluftspeicher 440 mit dem dort herrschenden Hochdruck PH, ist ein der Reinigungsvorrichtung vorgeschalteter Druckluftspeicher. Der Versorgungsdruck PV in der Druckluftzuleitung zum Speicher 440 sollte entsprechend durch ein Druckregelventil auf den Hochdruck PH reguliert werden.

In Fig. 2A befindet sich das Schaltventil 160 in der Ladestellung 160.1. Dementsprechend kann das erste Medium M1 aus der als Druckluftspeicher 440 ausgebildeten ersten Mediumsquelle MQ1 über die erste Mediumszuleitung 210, den Versorgungsanschluss X3, insbesondere Speiseanschluss 384, den Hochdruckspeicheranschluss X2 und den Druckanschluss 124 in den Hochdruckspeicher 140 strömen. Diese Verbindung wird auch als zweite Verbindung des Hochdruckspeichers 140 mit der ersten Mediumsquelle MQ1 bezeichnet.

In Fig. 2B Ist ein Zustand der Reinigungsvorrichtung 100 zu einem späteren Zeitpunkt dargestellt, an dem der Befüllungsvorgang des Hochdruckspeichers 140 bereits abgeschlossen ist und in dem Hochdruckspeicher 140 ein Speicherdruck PS herrscht, der wie im Druckluftspeicher 440 den Wert des Hochdrucks PH angenommen hat. In dem in Fig. 2B dargestellten Zustand wurde das Schaltventil 160 gerade von der Ladestellung 160.1 in die Lösestellung 160.2 geschaltet. Aufgrund des im Hochdruckspeicher 140 herrschenden Hochdrucks PH strömt das erste Medium impulsartig über den Druckanschluss des Hochdruckspeichers 140, den Hochdruckspeicheranschluss X2, den Düsenanschluss X1 und die Düsenzuleitung 125 zur Düse 126, von wo die Oberfläche O mit dem ersten Medium M1 impulsartig beaufschlagt wird. Diese Verbindung wird auch als eine erste Verbindung zwischen dem Hochdruckspeicher 140, 140' mit der Impulsdüse 126 bezeichnet.

Nach diesem Vorgang der impulsartigen Beaufschlagung der Oberfläche O mit dem ersten Medium M1 befindet sich die Reinigungsvorrichtung 100 in dem in Fig. 2C dargestellten Zustand. Der Hochdruckspeicher 140 ist in diesem Zustand praktisch entleert, insbesondere ist der Speicherdruck auf einen niedrigeren Wert abgefallen, insbesondere auf den Wert eines außerhalb der Reinigungsvorrichtung 100 herrschenden Umgebungsdrucks PU. Der Umgebungsdruck PU kann beispielsweise 1 bar betragen. In diesem Zustand kann insbesondere wieder mit dem Befüllen des Hochdruckspeicher 140 begonnen werden, nämlich indem das Schaltventil 160 wieder in die Ladestellung 160.1 geschaltet, und somit der in Fig. 2A dargestellte Zustand wieder herbeigeführt wird.

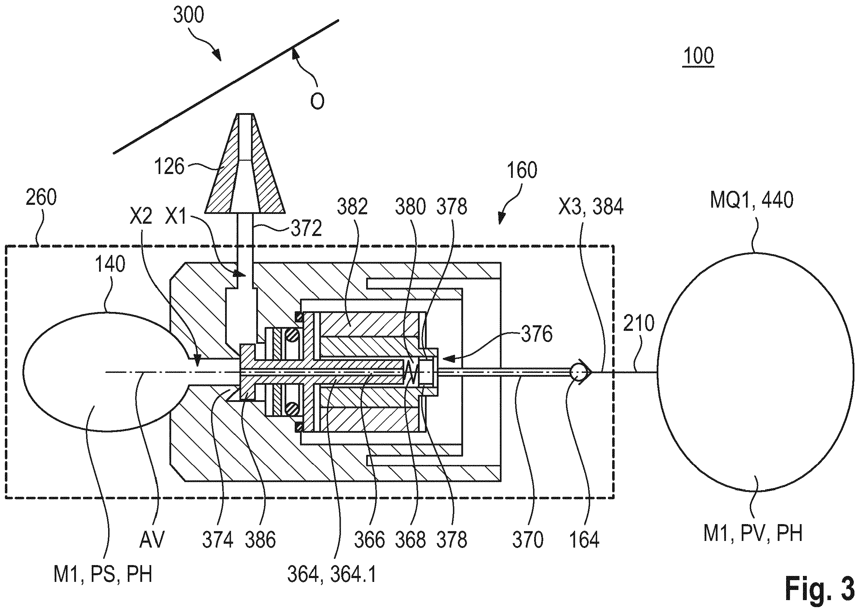

Fig. 3 zeigt eine weitere ausschnittsweise Darstellung einer Reinigungsvorrichtung 100, in der insbesondere das Ventilspeichermodul 260 in einer detaillierten Schnittdarstellung gezeigt ist. Von einer stark vereinfacht dargestellten, als Druckluftspeicher 440 ausgebildeten ersten Mediumsquelle MQ1 kann ein erstes Medium M1, das unter einem Versorgungsdruck PV, insbesondere unter einem Hochdruck PH steht, über eine erste Mediumszuleitung 210 dem Ventilspeichermodul 260 zugeführt werden. Von der ersten Mediumszuleitung 210 strömt das erste Medium M1 über einen als Versorgungsanschluss X3 ausgebildeten Speiseanschluss 384 und ein Zuleitungs-Rückschlagventil 164 in eine Ventilzuleitung 370 des als Magnetventil 360 ausgebildeten Schaltventils 160. Die Ventilzuleitung 370 verläuft vom Zuleitungs-Rückschlagventil 164 koaxial zu einer Ventilachse AV bis zu einem Mündungsabschnitt 376, wo das erste Medium M1 über mindestens eine radial versetzte Mündungsöffnung 378 in einen Federraum 380 geführt wird. Vorliegend weist der Mündungsabschnitt 376 zwei Mündungsöffnungen 378 auf. Der Federraum 380 nimmt eine in Richtung der Ventilachse AV kompressible Kolben-Rückstellfeder 368 auf. Die Kolben-Rückstellfeder 368 stützt sich auf der einen Seite am Mündungsabschnitt 376, und auf der anderen Seite an einem Ventilkolben 364 ab. Der Ventilkolben 364 weist eine entlang der Ventilachse AV durch den Ventilkolben 364 durchgehende Kolbenpassage 366 auf. Der Ventilkolben 364 ist innerhalb einer Magnetspuleneinheit 382 axial, das heißt. in Richtung der Ventilachse AV bewegbar. Vorliegend befindet sich der Ventilkolben 364 in einer Ladestellung 364.1, in der sich auch das Schaltventil 160 in seiner Ladestellung 160.1 (hier nicht gezeigt) befindet. In dieser Ladestellung 364.1 wird der Ventilkolben 364 durch die Kolben-Rückstellfeder 368 von dem Mündungsabschnitt 376 weggedrückt und ein Kolbensteg 386 des Ventilkolbens 364 gegen einen Dichtanschlag 374 gedrückt, insbesondere wird dabei die magnetische Magnetspuleneinheit 382 nicht bestromt. Durch den dichtenden Kontakt zwischen dem Ventilkolben 364 und dem Dichtanschlag 374 wird eine fluidführende Verbindung zwischen der Ventilzuleitung 370, der Kolbenpassage 364, einem Hochdruckspeicher-Anschluss X2 und dem Hochdruckspeicher 140 hergestellt. Auf diese Weise kann das erste Medium M1, in der Ladestellung 364.1 des Ventilkolben 364 von der ersten Mediumsquelle MQ1 in den Hochdruckspeicher 140 strömen und der Hochdruckspeicher 140 somit befüllt werden.

Durch ein Aktivieren, insbesondere ein Bestromen, der Magnetspuleneinheit 382, insbesondere durch ein hier nicht dargestelltes Steuermodul 350, kann der Ventilkolben 364 axial in Richtung des Mündungsabschnitts 376 bewegt werden. Dabei wird die Kolben-Rückstellfeder 368 komprimiert, und der Ventilkolben 364 vom Dichtanschlag 374 abgehoben. Der Ventilkolben 364 befindet sich somit in einer Lösestellung 364.2 (hier nicht dargestellt), sodass das im Hochdruckspeicher 140 unter einem Hochdruck PH stehende erste Medium M1 impulsartig über einen Düsenanschluss X1 und eine Düsenzuleitung 372 an die Impulsdüse 126 geleitet wird, von wo das erste Medium M1 impulsartig auf die Oberfläche O eines Sensors 300 zwecks Beaufschlagung geleitet wird. Dementsprechend befindet sich, wenn sich der Ventilkolben 364 in seiner Lösestellung 364.2 befindet, auch das Schaltventil 160 in seiner Lösestellung 160.2 (hier nicht gezeigt).

Durch die Integration des Hochdruckspeichers 140 und des Schaltventils 160 in ein Ventilspeichermodul 260 wird vorteilhaft ein kompakter Aufbau der Reinigungsvorrichtung 100 ermöglicht. Das Ventilspeichermodul 260 kann weiterhin das Zuleitungs-Rückschlagventil 164 und/oder die Impulsdüse 126 umfassen. Das Ventilspeichermodul 260 kann beispielsweise ein Kunststoff- oder Metallgehäuse umfassen, in die Komponenten untergebracht sind. Durch den dargestellten Aufbau weist das Ventilspeichermodul 260 vorteilhaft lediglich den Versorgungsanschluss X3 auf und keine weiteren Eingänge, insbesondere keine weiteren Eingänge an anderen Außenseiten des Ventilspeichermoduls 260, wodurch die Montage vereinfacht werden kann. Es ist natürlich zu verstehen, dass den hier erwähnten Magnetventilen z. B. Magnetventile 360, neben der Druckluft auch elektrische Energie bei Betätigung zugeführt wird.

Dadurch, dass gemäß dem Konzept der Erfindung das insbesondere unter einem Hochdruck PH stehende erste Medium M1 direkt durch das Schaltventil 160 geschaltet wird, und somit die Abhängigkeit von anderen Ventilarten, insbesondere Vorsteuerventilen, verringert wird, kann das Ventilspeichermodul 260 und somit auch die Reinigungsvorrichtung 100 vorteilhaft noch kompakter ausfallen.

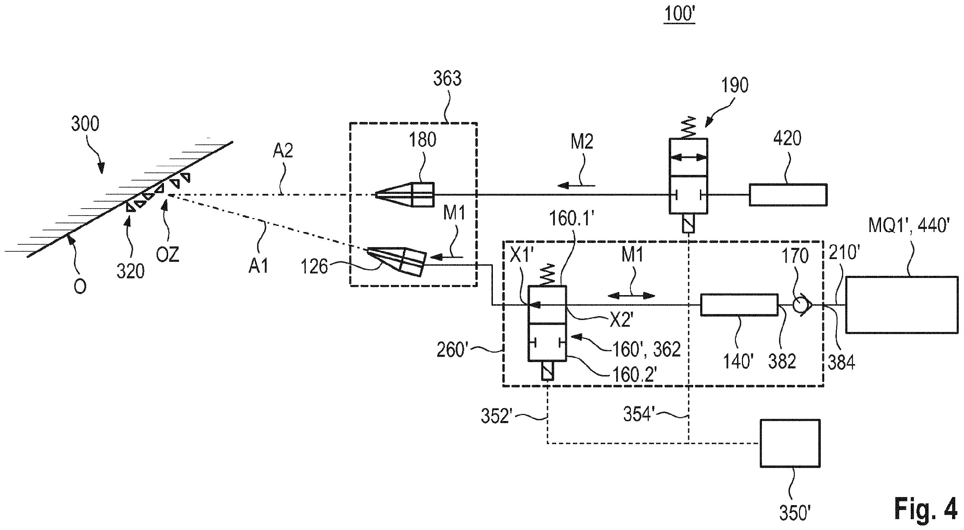

Fig. 4 zeigt eine weitere, nicht beanspruchte Ausführungsform einer Reinigungsvorrichtung 100', in der ein Schaltventil 160' als ein Magnetventil 360 in Form eines 2/2-Wegeventil 362 eingesetzt ist. Das Schaltventil 160' weist keinen Versorgungsanschluss X3, sondern lediglich einen Düsenanschluss X1' und einen Hochdruckspeicheranschluss X2' auf. Ein Hochdruckspeicher 140' weist, insbesondere im Unterschied zu der zuvor gezeigten Weiterbildung, einen Hochdruckspeicher-Direktanschluss 382 auf, der den Hochdruckspeicher 140` über ein Hochdruckspeicher-Halteventil 170 mit einer ersten Mediumszuleitung 210' und auf diese Weise mit einer ersten Mediumsquelle MQ1' in Form eines Druckluftspeichers 440' verbindet. Der Hochdruckspeicher 140' wird somit direkt von der ersten Mediumsquelle MQ1' mit dem ersten Medium M1 befüllt, wobei das Hochdruckspeicher-Halteventil 170 eine Kondensatorwirkung des Hochdruckspeichers 140 ermöglicht. Dies bedeutet, dass das erste Medium M1 von der ersten Mediumsquelle MQ1' in den Hochdruckspeicher 140' strömen kann, eine Strömung in Gegenrichtung jedoch durch das Hochdruckspeicher-Halteventil 170 gesperrt wird.

Vorliegend bilden insbesondere das Schaltventil 160', der Hochdruckspeicher 140` und das Hochdruckspeicher-Halteventil 170 eine bauliche Einheit in Form eines Ventilspeichermoduls 260'.

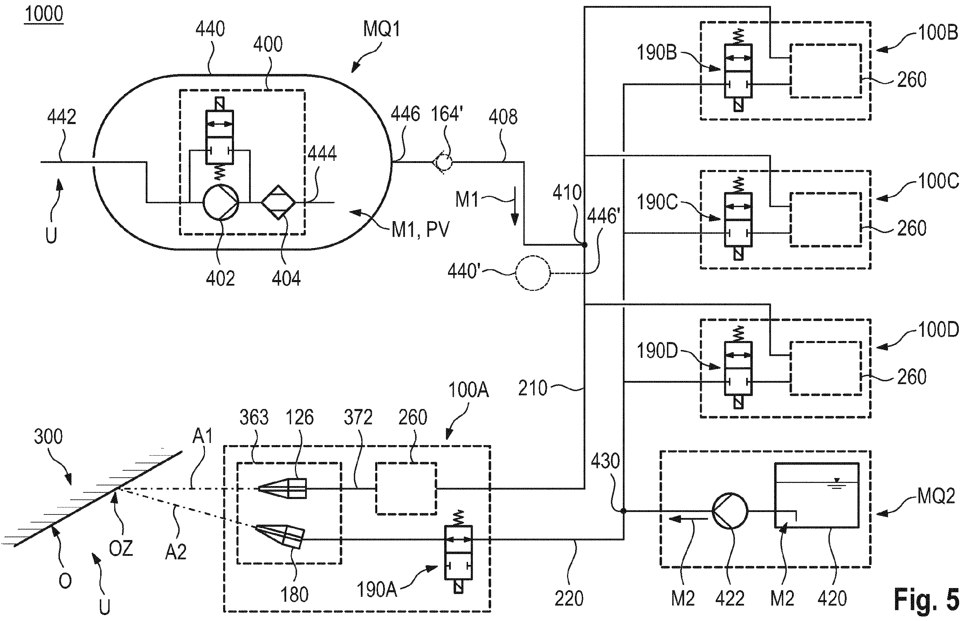

Fig. 5 zeigt eine Weiterbildung eines Druckluftsystems 1000, Teil eine weitere, unbeanspruchte Ausführungsform.

Das Druckluftsystem 1000 weist vier Reinigungsvorrichtungen 100A, 100B, 100C und 1000 auf, welche im Wesentlichen jeweils der in Fig. 1 gezeigten Reinigungsvorrichtung 100 entsprechen. Hierbei ist nur eine Reinigungsvorrichtung 100A detailliert dargestellt, und die übrigen drei Reinigungsvorrichtungen 100B, 100C und 100D der Übersichtlichkeit halber nur angedeutet.

Das Druckluftsystem 1000 weist eine erste Mediumsquelle MQ1 zur Bereitstellung eines ersten Mediums M1 auf. Die erste Mediumsquelle MQ1 ist vorliegend aus einer Verdichteranordnung 400 gebildet, wobei die Verdichteranordnung 400 einen Verdichter 402, einen Lufttrockner 404 und einen Druckluftspeicher 440 aufweist. Durch das Vorsehen eines Druckluftspeichers 440 kann vorteilhaft ein schnelleres Versorgen des Druckluftsystems 1000 erreicht werden und das Erzeugen von Druckluft zeitlich von dem Verbrauchen von Druckluft entkoppelt werden. Vorliegend ist die Verdichteranordnung 400 im Rahmen einer Weiterbildung innerhalb des Druckluftspeichers 440 angeordnet, was insbesondere zu einer vorteilhaften kompakten Bauweise führt. Das erste Medium M1, insbesondere Luft M1.1, wird aus der Umgebung U durch den Verdichter 402 über eine Verdichterzuführung 442 angesaugt und verdichtet, anschließend im Lufttrockner 404 getrocknet und über einen Verdichterauslass 444 in den Druckluftspeicher 440 geleitet. Aus dem Druckluftspeicher 440 wird das erste Medium M1 über einen Speicherauslass 446 und weiter über eine erste Quellenleitung 408 an einem ersten Versorgungsanschluss 410 bereitgestellt.

Mithilfe der Verdichteranordnung 400 in Verbindung mit dem Druckluftspeicher 440 als erste Mediumsquelle MQ1, insbesondere als Anordnung mit der Verdichteranordnung 400 innerhalb des Druckluftspeichers 440, können die Reinigungsvorrichtungen 100A, 100B, 100C und 100D relativ schnell mit Druckluft geladen werden, zudem wird ein konstanter Druck in den mit der ersten Mediumsquelle MQ1 verbundenen Druckleitungen sichergestellt, insbesondere ohne dass dazu die Verdichteranordnung 400 aktiv werden muss.

Von dem ersten Versorgungsanschluss 410 gelangt das erste Medium M1 zu einer ersten Mediumszuleitung 210, von welcher es an einem Versorgungsanschluss X3 eines hier nicht näher dargestellten Schaltventils 160 einer Ventilspeicheranordnung 260 der Reinigungsvorrichtung 100A, und analog den übrigen drei Reinigungsvorrichtungen 100B, 100C und 100D bereitgestellt wird.

Alternativ oder zusätzlich zu den in den Ventilspeicheranordnungen 260 der jeweiligen Reinigungsvorrichtungen 100A, 100B, 100C und 1000 angeordneten und hier nicht dargestellten Zuleitungs-Rückschlagventilen 164 oder Hochdruckspeicher-Halteventilen 174 kann das Druckluftsystem 1000, insbesondere - wie in Fig. 5 gestrichelt dargestellt - in der ersten Quellenleitung 408, ein weiteres Zuleitungs-Rückschlagventil 164' aufweisen. Hierdurch wird vorteilhaft erreicht, dass das von der ersten Mediumsquelle MQ1 erzeugte und insbesondere verdichtete erste Medium bei einem Druckabfall in der ersten Mediumsquelle MQ1, insbesondere im Druckluftspeicher 440, nicht zurückströmt, was einen Druckabfall in der ersten Mediumszuleitung 210 zur Folge hätte. Stattdessen bewirkt das gegen die Förderrichtung der ersten Medienquelle sperrende weitere Zuleitungs-Rückschlagventil 164`, dass das erste Medium nicht in Richtung der ersten Mediumsquelle MQ1 zurückströmt und somit insbesondere ein Versorgungsdruck PV in der ersten Mediumszuleitung 210 gehalten wird.

Alternativ oder zusätzlich zu dem Druckluftspeicher 440 kann das Druckluftsystem 1000, insbesondere - wie in Fig. 5 gestrichelt dargestellt - in der ersten Mediumszuleitung 210, einen weiteren Druckluftspeicher 440' aufweisen. Dieser ist vorliegend über einen Speicherauslass 446' an die Mediumszuleitung 210 angeschlossen. Auch ist es möglich, den Speicherauslass 446` an einer anderen geeigneten Stelle des Druckluftsystems 1000, beispielsweise in der ersten Quellenleitung 408, anzuordnen.

Alternativ oder zusätzlich kann - in einer hier nicht dargestellten Weiterbildung - auch ein erstes Medium M1, insbesondere Druckluft, verwendet werden, welches von einer anderen Mediumsquelle MQ1' bezogen wird, insbesondere einer Mediumsquelle MQ1', die einem anderen Primärzweck dient. Eine solche andere Mediumsquelle MQ1' kann beispielsweise eine Druckluftversorgungsanlage 900 für eine Luftfederanlage 901 oder dergleichen Pneumatikanlage 910 eines Fahrzeugs 800 sein.

Das Druckluftsystem 1000 weist weiter eine zweite Mediumsquelle MQ2 zur Bereitstellung eines insbesondere flüssigen zweiten Mediums M2 auf. Vorliegend ist die zweite Mediumsquelle MQ2 aus einem Tank 420 und einer an den Tank angeschlossenen Pumpe 422 gebildet. Mittels der Pumpe kann das zweite Medium M2 aus dem Tank 420 zu einem zweiten Versorgungsanschluss 430 gefördert werden. Über den zweiten Versorgungsanschlüsse 430 gelangt das zweite Medium M2 zur zweiten Mediumszuleitung 220. Die zweite Mediumszuleitung 220 ist mit dem zweiten Schaltventil 190A der Reinigungsvorrichtung 100A, und weiter mit den zweiten Schaltventilen 190B, 190C, 190D der jeweiligen weiteren Reinigungsvorrichtungen 100B, 100C, 1000 verbunden. Über die zweiten Schaltventile 190A, 190B, 190C, 190D kann somit die Versorgung der jeweiligen Reinigungsvorrichtungen 100A, 100B, 100C, 100D mit dem zweiten Medium M2 einzeln gesteuert werden.

Alternativ oder zusätzlich kann - in einer hier nicht dargestellten Weiterbildung - auch ein zweites Medium M2 verwendet werden, welches von einer anderen Mediumsquelle MQ2' bezogen wird, insbesondere einer Mediumsquelle MQ2`, die einem anderen Primärzweck dient. Eine solche andere Mediumsquelle MQ2` kann beispielsweise eine Scheibenreinigungsanlage 922 oder dergleichen Reinigungsanlage 920 für ein Fahrzeug 800 sein.

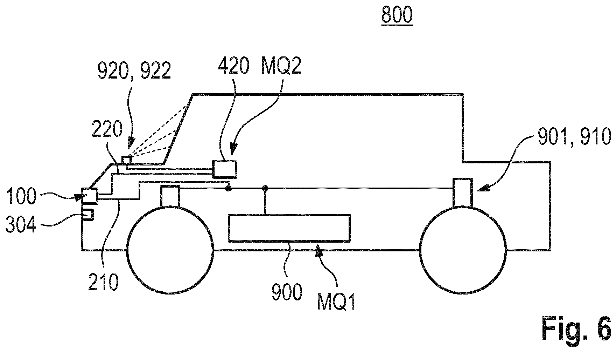

Fig. 6 zeigt eine schematische Darstellung eines Fahrzeugs 800 - vorliegend in Form eines PKW - aufweisend eine Reinigungsvorrichtung 100 für einen Umgebungserfassungssensor 304. Vorliegend wird die erste Mediumsquelle MQ1 durch eine Druckluftversorgungsanlage 900 gebildet, welche weiterhin zur Versorgung einer Pneumatikanlage 910 in Form einer Luftfederanlage 901 vorgesehen ist. Selbstverständlich ist es auch möglich, dass die erste Mediumsquelle MQ1 von einem separaten Verdichter oder dergleichen Druckluftquelle gebildet wird. Die erste Mediumsquelle MQ1 ist zwecks Zuführung des ersten Mediums M1 über eine erste Mediumszuleitung 210 mit der Reinigungsvorrichtung 100 verbunden. Die zweite Mediumsquelle MQ2 weist vorliegend durch einen Tank 420 auf, welcher ebenfalls zur Versorgung einer Reinigungsanlage 920 in Form einer Scheibenreinigungsanlage 922 mit Reinigungsflüssigkeit eingesetzt wird. Dieser Tank 420 ist über eine zweite Mediumszuleitung 220 mit der Reinigung Vorrichtung 100 verbunden. Auf diese Weise kann über eine - hier aus Gründen der Übersichtlichkeit nicht dargestellte - Pumpe 422 das zweite Medium M2 der Reinigungsvorrichtung 100 bereitgestellt werden. Selbstverständlich ist es bei der zweiten Mediumsquelle MQ2 ebenso möglich, dass diese durch eine eigene separate, insbesondere von anderen Systemen unabhängige, Mediumsquelle gebildet wird.

### Bezugszeichenliste (Bestandteil der Beschreibung)

- 100, 100', 100A, 100B, 100C,100D: Reinigungsvorrichtung
- 125: Impulsdüsenzuleitung
- 126: Impulsdüse
- 140, 140': Hochdruckspeicher
- 140V: Fassungsvolumen
- 160, 160': Schaltventil
- 160.1: Ladestellung
- 160.2: Lösestellung
- 160.2`: Ladestellung/Ladehaltung - Druckaufbau
- 160.1': Lösestellung - Impulsfreigabe
- 164, 164': Zuleitungs-Rückschlagventil
- 170: Hochdruckspeicher-Halteventil
- 180, 180K: Düse
- 190, 190A, 190B, 190C, 190D: Zweites Schaltventil
- 192: Zuführungsleitung
- 210, 210': erste Mediumszuleitung
- 220: zweite Mediumszuleitung
- 260, 260': Ventilspeichermodul
- 300: Sensor
- 302: optischer Sensor
- 304: Umgebungserfassungssensor
- 310: Abdeckung eines Sensors
- 320: Dreckpartikel
- 350, 350': Steuermodul
- 352, 352': erste Schaltventil-Steuerleitung
- 354, 354': zweite Schaltventil-Steuerleitung
- 360: Magnetventil
- 361: 3/2-Wege-Ventil
- 362: 2/2-Wege-Ventil
- 363: Düsenanordnung
- 364: Ventilkolben
- 366: Ventilkolbenpassage
- 368: Kolben-Rückstellfeder
- 370: Ventilzuleitung
- 372: Düsenzuleitung
- 374: Dichtanschlag
- 376: Mündungsabschnitt
- 378: Mündungsöffnung
- 380: Federraum
- 382: Hochdruckspeicher-Direktanschluss
- 384: Speiseanschluss
- 386: Kolbensteg
- 400: Verdichteranordnung
- 402: Verdichter
- 404: Lufttrockner
- 408: erste Quellenleitung
- 410: erster Versorgungsanschluss
- 420: Tank
- 422: Pumpe
- 430: zweiter Versorgungsanschluss
- 440, 440': Druckluftspeicher, zentraler Druckspeicher
- 442: Verdichterzuführung
- 444: Verdichterauslass
- 446, 446`: Speicherauslass
- 800: Fahrzeug
- 900: Druckluftversorgungsanlage
- 901: Luftfederanlage
- 910: Pneumatikanlage
- 920: Reinigungsanlage
- 922: Scheibenreinigungsanlage
- 1000: Druckluftsystem
- A1: erste Strahlachse
- A2: zweite Strahlachse
- AV: Ventilachse
- M1: erstes Medium
- M1.1: Luft
- M2: zweites Medium
- M2.1: Wasser
- M2.2: Reinigungsmittel
- MS: Mediumssequenz
- MQ1, MQ1': erste Mediumsquelle
- MQ2: zweite Mediumsquelle
- O: Oberfläche
- OZ: Zielbereich
- PH: Hochdruck, Arbeitsdruck
- PS: Speicherdruck
- PV: Versorgungsdruck
- PU: Umgebungsdruck
- X1, X1': Düsenanschluss
- X2, X2': Hochdruckspeicheranschluss
- X3: Versorgungsanschluss

## Patentansprüche

1. Reinigungsvorrichtung (100) zum selektiven Beaufschlagen einer Oberfläche (O) mit einem ersten Medium (M1), aufweisend:
- einen Hochdruckspeicher (140) ausgebildet zum Speichern des unter einem Speicherdruck (PS), insbesondere unter Hochdruck (PH), stehenden ersten Mediums (M1),
- eine Impulsdüse (126), ausgebildet zum impulsartigen Beaufschlagen der Oberfläche (O) mit dem unter dem Speicherdruck (PS) stehenden ersten Medium (M1),
- ein Schaltventil (160) **dadurch gekennzeichnet, dass**
- der Hochdruckspeicher (140) und das Schaltventil (160) in einem Speicherventilmodul (260) baulich integriert sind, wobei das Schaltventil als Magnetventil (360) ausgebildet ist, und aufweist:
- einen Düsenanschluss (X1) und einen Hochdruckspeicheranschluss (X2), ausgebildet zum selektiven Herstellen einer ersten Verbindung zwischen dem Hochdruckspeicher (140) mit der Impulsdüse (126), und
- einen Speiseanschluss (384) zum Herstellen einer zweiten Verbindung des Hochdruckspeichers (140) mit einer ersten Mediumsquelle (MQ1), wobei
- das Schaltventil (160) in einer Lösestellung (160.2) die erste Verbindung zwischen dem Hochdruckspeicher (140) und der Impulsdüse (126) über den Hochdruckspeicheranschluss (X2) und den Düsenanschluss (X1) freigibt, und
- das Schaltventil (160) in einer Ladestellung (160.1) die zweite Verbindung zwischen dem Hochdruckspeicher (140) und der ersten Mediumsquelle (MQ1, MQ1') über einen Versorgungsanschluss (X3), insbesondere Speiseanschluss (384), und den Hochdruckspeicheranschluss (X2) freigibt, und
- das Schaltventil (160) weiter ausgebildet ist, zwischen der Lösestellung (160.2) zur Freigabe der ersten Verbindung und Ladestellung (160.1) zur Freigabe der zweiten Verbindung zu schalten, wobei
- der Hochdruckspeicheranschluss (X2) unter dem Speicherdruck (PS) des Hochdruckspeichers (140) steht und/oder der Versorgungsanschluss (X3) unter dem Druck der ersten Mediumsquelle (MQ1) steht.

2. Reinigungsvorrichtung (100) nach Anspruch 1, **dadurch gekennzeichnet, dass**
- die erste Verbindung gebildet wird mit dem Schaltventil (160) und wenigstens mit einem Druckanschluss des Hochdruckspeichers (140), dem Hochdruckspeicheranschluss (X2), den Düsenanschluss (X1) und einer Düsenzuleitung (125) zur Impulsdüse (126) ,und
- die zweite Verbindung gebildet wird mit dem Schaltventil (160) und wenigstens mit einer ersten Mediumszuleitung (210) zwischen der Mediumsquelle (MQ1) und dem Versorgungsanschluss (X3), insbesondere Speiseanschluss (384), dem Hochdruckspeicheranschluss (X2) und einem Druckanschluss (124) zwischen dem Hochdruckspeicheranschluss (X2) und dem Hochdruckspeicher (140).

3. Reinigungsvorrichtung (100) nach Anspruch 1 oder 2, **gekennzeichnet durch**
- eine Düse (180), ausgebildet zum Beaufschlagen der Oberfläche (O) mit einem zweiten Medium (M2), wobei
- die Reinigungsvorrichtung (100) ausgebildet ist, die Oberfläche (O) mit einer Mediumssequenz (MS) aus mindestens dem ersten Medium (M1) und dem zweiten Medium (M2) zu beaufschlagen, insbesondere das erste Medium ein gasförmiges Medium (M1) und das zweite Medium ein flüssiges Medium (M2) ist.

4. Reinigungsvorrichtung (100) nach einem der Ansprüche 1 bis 3, **dadurch gekennzeichnet, dass** das Schaltventil (160) als ein Magnetventil (360) in Form eines 3/2-Wege-Ventils (361) ausgebildet ist, insbesondere einen Versorgungsanschluss (X3) als den Speiseanschluss (384) aufweist.

5. Reinigungsvorrichtung (100) nach einem der vorherigen Ansprüche, **dadurch gekennzeichnet, dass** das Schaltventil (160) ausgebildet ist, unter dem Hochdruck (PH), insbesondere unter dem Hochdruck (PH) stehenden Hochdruckspeicher-Anschluss (X2), von einer Ladestellung (160.1) in eine Lösestellung (160.2) zu schalten.

6. Reinigungsvorrichtung (100) nach einem der vorherigen Ansprüche, **dadurch gekennzeichnet, dass** das Speicherventilmodul (260) und/oder das Schaltventil (160) ein Zuleitungs-Rückschlagventil (164) aufweist, ausgebildet zum Sperren einer Strömung in der Richtung vom Schaltventil (160) zu einer ersten Mediumszuleitung (210).

7. Reinigungsvorrichtung (100) nach einem der vorherigen Ansprüche, **dadurch gekennzeichnet, dass** der Hochdruckspeicher (140) ein Fassungsvolumen (140V) zwischen 2ml bis 10 ml aufweist.

8. Druckluftsystem (1000), insbesondere für ein Fahrzeug (800), aufweisend:
- mindestens eine Reinigungsvorrichtung (100) nach einem der vorherigen Ansprüche 1 bis 7, wobei
- eine erste Mediumsquelle (MQ1) eine Mediumsquelle (MQ1) des Druckluftsystems (1000) ist und über eine erste Mediumszuleitung (210) mit der mindestens einen Reinigungsvorrichtung (100) verbindbar ist.

9. Druckluftsystem (1000) nach Anspruch 8, weiter aufweisend:
- eine zweite Mediumsquelle (MQ2), die über eine zweite Mediumszuleitung (220) mit der mindestens einen Reinigungsvorrichtung (100) verbindbar ist.

10. Druckluftsystem (1000) nach Anspruch 8 oder 9, **dadurch gekennzeichnet, dass** das Druckluftsystem (1000) mindestens ein Zuleitungs-Rückschlagventil (164) aufweist, wobei das Zuleitungs-Rückschlagventil (164) in der ersten Mediumszuleitung (210) und/oder in der ersten Quellenleitung (408) angeordnet ist, wobei das Zuleitungs-Rückschlagventil (164) die Leitung (164, 210) für gegen die Förderrichtung der ersten Medienquelle zurückströmendes Medium sperrt und/oder ein Versorgungsdruck (PV) in der ersten Leitung (164, 210) gehalten wird.

11. Fahrzeug (800) mit einem Druckluftsystem (1000) nach einem der Ansprüche 8 bis 10.

12. Fahrzeug (800) nach Anspruch 11, **dadurch gekennzeichnet, dass** bei dem Druckluftsystem (1000) die erste Mediumsquelle (MQ1) einem anderen Primärzweck dient und/oder der Versorgung einer Luftfederanlage (901) oder dergleichen Pneumatikanlage (910) im Fahrzeug (800).

13. Fahrzeug (800) nach einem der Ansprüche 11 oder 12, **dadurch gekennzeichnet, dass** bei dem Druckluftsystem (1000) die zweite Mediumsquelle (MQ2) einem anderen Primärzweck dient und/oder der Versorgung einer Scheibenreinigungsanlage (922) oder dergleichen Reinigungsanlage (920) im Fahrzeug (800).

14. Fahrzeug (800) nach einem der Ansprüche 11 bis 13 **dadurch gekennzeichnet, dass** bei dem Druckluftsystem (1000) die erste Mediumsquelle (MQ1) eine Verdichteranordnung (400) und/oder einen Druckluftspeicher (440) aufweist, insbesondere die Verdichteranordnung (400) in dem Druckluftspeicher (440) angeordnet ist.

15. Reinigungsverfahren zum Reinigen einer Oberfläche (O), mit einer Reinigungsvorrichtung (100) nach einem der Ansprüche 1 bis 7, zum selektiven Beaufschlagen einer Oberfläche (O) mit einer Mediumssequenz (MS) aus mindestens einem ersten, insbesondere gasförmigen, Medium (M1) und einem zweiten, insbesondere flüssigen, Medium (M2), wobei das Verfahren die Schritte aufweist:
- Aufladen eines Hochdruckspeichers (140) mit einem ersten Medium (M1), insbesondere Luft (M1.1);
- Halten eines Speicherdrucks (PS) im Hochdruckspeicher (140), insbesondere durch Schalten des Schaltventils (160) in eine Ladestellung (160.1);
- Beaufschlagen der Oberfläche (O) mit einem zweiten Medium (M2), insbesondere Wasser (M2.1) oder einem Reinigungsmittel (M2.2); und/oder
- Beaufschlagen der Oberfläche (O) mit dem ersten Medium (M1, M1.1), insbesondere durch Schalten des Schaltventils (160) in eine Lösestellung (160.2).

16. Reinigungsverfahren nach Anspruch 15, **dadurch gekennzeichnet, dass** das Beaufschlagen der Oberfläche (O) mit dem zweiten Medium (M2, M2.1, M2.2) und das Beaufschlagen der Oberfläche (O) mit dem ersten Medium (M1, M1.1) zeitlich gesteuert, insbesondere abwechselnd und/oder intermittierend, erfolgt.

## Claims

1. Cleaning device (100) for selectively applying a first medium (M1) to a surface (O), comprising:
- a high-pressure reservoir (140) designed for storing the first medium (M1) under a reservoir pressure (PS), in particular under high pressure (PH),
- a pulse nozzle (126) designed for applying the first medium (M1) under the reservoir pressure (PS) to the surface (O) in a pulsed manner,
- a switching valve (160), **characterized in that**
- the high-pressure reservoir (140) and the switching valve (160) are structurally integrated in a reservoir valve module (260), the switching valve being designed as a solenoid valve (360) and comprising:
- a nozzle port (X1) and a high-pressure reservoir port (X2) designed for selectively establishing a first connection between the high-pressure reservoir (140) and the pulse nozzle (126), and
- a feed port (384) for establishing a second connection between the high-pressure reservoir (140) and a first medium source (MQ1),
- the switching valve (160), in a release position (160.2), releasing the first connection between the high-pressure reservoir (140) and the pulse nozzle (126) via the high-pressure reservoir port (X2) and the nozzle port (X1), and
- the switching valve (160), in a loading position (160.1), releasing the second connection between the high-pressure reservoir (140) and the first medium source (MQ1, MQ1') via a supply port (X3), in particular feed port (384), and the high-pressure reservoir port (X2), and
- the switching valve (160) being further designed for switching between the release position (160.2) to release the first connection and the loading position (160.1) to release the second connection,
- the high-pressure reservoir port (X2) being under the reservoir pressure (PS) of the high-pressure reservoir (140) and/or the supply port (X3) being under the pressure of the first medium source (MQ1).

2. Cleaning device (100) according to claim 1, **characterized in that**
- the first connection is formed with the switching valve (160) and at least with a pressure port of the high-pressure reservoir (140), the high-pressure reservoir port (X2), the nozzle port (X1) and a nozzle supply line (125) to the pulse nozzle (126), and
- the second connection is formed with the switching valve (160) and at least with a first medium supply line (210) between the medium source (MQI) and the supply port (X3), in particular feed port (384), the high-pressure reservoir (X2) and a pressure port (124) between the high-pressure reservoir port (X2) and the high-pressure reservoir (140).

3. Cleaning device (100) according to either claim 1 or claim 2, **characterized by**
- a nozzle (180) designed for applying a second medium (M2) to the surface (O),
- the cleaning device (100) being designed to apply a medium sequence (MS) from at least the first medium (M1) and the second medium (M2) to the surface (O), in particular the first medium being a gaseous medium (M1) and the second medium being a liquid medium (M2).

4. Cleaning device (100) according to any of claims 1 to 3,
**characterized in that** the switching valve (160) is designed as a solenoid valve (360) in the form of a 3/2 directional valve (361), in particular comprises a supply port (X3) as the feed port (384).

5. Cleaning device (100) according to any of the preceding claims,
**characterized in that** the switching valve (160) is designed for switching from a loading position (160.1) into a release position (160.2) under the high pressure (PH), in particular high-pressure reservoir port (X2) under the high pressure (PH).

6. Cleaning device (100) according to any of the preceding claims,
**characterized in that** the reservoir valve module (260) and/or the switching valve (160) comprises a supply line non-return valve (164) designed for blocking a flow in the direction from the switching valve (160) to a first medium supply line (210).

7. Cleaning device (100) according to any of the preceding claims,
**characterized in that** the high-pressure reservoir (140) has a capacity (140V) of between 2 ml and 10 ml.

8. Compressed air system (1000), in particular for a vehicle (800), comprising:
- at least one cleaning device (100) according to any of the preceding claims 1 to 7, wherein
- a first medium source (MQ1) is a medium source (MQ1) of the compressed air system (1000) and can be connected to the at least one cleaning device (100) via a first medium supply line (210).

9. Compressed air system (1000) according to claim 8, further comprising:
- a second medium source (MQ2) which is a second medium supply line (220) having the at least one cleaning device (100).

10. Compressed air system (1000) according to either claim 8 or claim 9, **characterized in that** the compressed air system (1000) comprises at least one supply line non-return valve (164), the supply line non-return valve (164) being arranged in the first medium supply line (210) and/or in the first source line (408), the supply line non-return valve (164) blocking the line (164, 210) for medium flowing back against the conveying direction of the first media source and/or a supply pressure (PV) being held in the first line (164, 210).

11. Vehicle (800) having a compressed air system (1000) according to any of claims 8 to 10.

12. Vehicle (800) according to claim 11, **characterized in that** in the compressed air system (1000), the first medium source (MQ1) is used for another primary purpose and/or the supply of an air suspension installation (901) or similar pneumatic installation (910) in the vehicle (800).

13. Vehicle (800) according to either claim 11 or claim 12, **characterized in that** in the compressed air system (1000), the second medium source (MQ2) is used for another primary purpose and/or the supply of a windshield cleaning installation (922) or similar cleaning installation (920) in the vehicle (800).

14. Vehicle (800) according to any of claims 11 to 13 **characterized in that** in the compressed air system (1000), the first medium source (MQ1) comprises a compressor arrangement (400) and/or a compressed air reservoir (440), in particular the compressor arrangement (400) is arranged in the compressed air reservoir (440).

15. Cleaning method for cleaning a surface (O), having a cleaning device (100) according to any of claims 1 to 7, for selectively applying a medium sequence (MS) from at least one first, in particular gaseous, medium (M1) and a second, in particular liquid, medium (M2) to a surface (O), wherein the method comprises the steps of:
- loading a high-pressure reservoir (140) with a first medium (M1), in particular air (M1.1);
- holding a reservoir pressure (PS) in the high-pressure reservoir (140), in particular by switching the switching valve (160) into a loading position (160.1);
- applying a second medium (M2), in particular water (M2.1) or a cleaning agent (M2.2), to the surface (O); and/or
- applying the first medium (M1, M1.1) to the surface (O), in particular by switching the switching valve (160) into a release position (160.2).

16. Cleaning method according to claim 15, **characterized in that** the second medium (M2, M2.1, M2.2) is applied to the surface (O) and the first medium (M1, M1.1) is applied to the surface (O) in a time-controlled manner, in particular alternately and/or intermittently.

## Revendications

1. Dispositif de nettoyage (100) permettant d'exposer sélectivement une surface (O) à l'action d'un premier fluide (M1), présentant :
- un accumulateur haute pression (140) conçu pour l'accumulation du premier fluide (M1) se trouvant sous une pression d'accumulateur (PS), en particulier sous haute pression (PH),
- une buse à impulsions (126), conçue pour l'exposition par impulsions de la surface (O) à l'action du premier fluide (M1) se trouvant sous la pression d'accumulateur (PS),
- une vanne de commutation (160) **caractérisé en ce que**
- l'accumulateur haute pression (140) et la vanne de commutation (160) sont intégrés de manière structurale dans un module de vanne d'accumulateur (260), la vanne de commutation étant conçue sous la forme d'une électrovanne (360), et présentant :
- un raccord de buse (X1) et un raccord d'accumulateur haute pression (X2), conçus pour l'établissement de manière sélective d'une première liaison entre l'accumulateur haute pression (140) avec la buse à impulsions (126), et
- un raccord d'alimentation (384) permettant d'établir une seconde liaison de l'accumulateur haute pression (140) avec une première source de fluide (MQ1),
- la vanne de commutation (160) libérant, dans une position de desserrage (160.2), la première liaison entre l'accumulateur haute pression (140) et la buse à impulsions (126) par l'intermédiaire du raccord d'accumulateur haute pression (X2) et du raccord de buse (X1), et
- la vanne de commutation (160) libérant, dans une position de chargement (160.1), la seconde liaison entre l'accumulateur haute pression (140) et la première source de fluide (MQ1, MQ1') par l'intermédiaire d'un raccord d'approvisionnement (X3), en particulier du raccord d'alimentation (384), et du raccord d'accumulateur haute pression (X2), et
- la vanne de commutation (160) étant en outre conçue pour commuter entre la position de desserrage (160.2) permettant de libérer la première liaison et la position de chargement (160.1) permettant de libérer la seconde liaison,
- le raccord d'accumulateur haute pression (X2) se trouvant sous la pression d'accumulateur (PS) de l'accumulateur haute pression (140) et/ou le raccord d'approvisionnement (X3) se trouvant sous la pression de la première source de fluide (MQ1).

2. Dispositif de nettoyage (100) selon la revendication 1, **caractérisé en ce que**
- la première liaison est formée avec la vanne de commutation (160) et au moins avec un raccord de pression de l'accumulateur haute pression (140), le raccord d'accumulateur haute pression (X2), le raccord de buse (X1) et une conduite d'acheminement de buse (125) vers la buse à impulsions (126), et
- la seconde liaison est formée avec la vanne de commutation (160) et au moins avec une première conduite d'acheminement de fluide (210) entre la source de fluide (MQ1) et le raccord d'approvisionnement (X3), en particulier le raccord d'alimentation (384), le raccord d'accumulateur haute pression (X2) et un raccord de pression (124) entre le raccord d'accumulateur haute pression (X2) et l'accumulateur haute pression (140).

3. Dispositif de nettoyage (100) selon la revendication 1 ou 2, **caractérisé par**
- une buse (180), conçue pour l'exposition de la surface (O) à l'action d'un second fluide (M2),
- le dispositif de nettoyage (100) étant conçu pour exposer la surface (O) à une séquence de fluides (MS) composée au moins du premier fluide (M1) et du second fluide (M2), en particulier le premier fluide étant un fluide (M1) gazeux et le second fluide étant un fluide (M2) liquide.

4. Dispositif de nettoyage (100) selon l'une des revendications 1 à 3, **caractérisé en ce que** la vanne de commutation (160) est conçue en tant qu'électrovanne (360) sous la forme d'une vanne à 3/2 voies (361), en particulier présente un raccord d'approvisionnement (X3) en tant que raccord d'alimentation (384).

5. Dispositif de nettoyage (100) selon l'une des revendications précédentes, **caractérisé en ce que** la vanne de commutation (160) est conçue pour commuter d'une position de chargement (160.1) vers une position de desserrage (160.2) sous la haute pression (PH), en particulier le raccord d'accumulateur haute pression (X2) se trouvant sous la haute pression (PH).

6. Dispositif de nettoyage (100) selon l'une des revendications précédentes, **caractérisé en ce que** le module de vanne d'accumulateur (260) et/ou la vanne de commutation (160) présentent une vanne antiretour d'acheminement (164) conçue pour le blocage d'un écoulement dans la direction depuis la vanne de commutation (160) vers une première conduite d'acheminement de fluide (210).

7. Dispositif de nettoyage (100) selon l'une des revendications précédentes, **caractérisé en ce que** l'accumulateur haute pression (140) présente une capacité (140V) comprise entre 2 ml à 10 ml.

8. Système d'air comprimé (1000), en particulier pour un véhicule (800), présentant :
- au moins un dispositif de nettoyage (100) selon l'une des revendications 1 à 7 précédentes,
- une première source de fluide (MQ1) étant une source de fluide (MQ1) du système d'air comprimé (1000) et pouvant être reliée par l'intermédiaire d'une première conduite d'acheminement de fluide (210) à l'au moins un dispositif de nettoyage (100).

9. Système d'air comprimé (1000) selon la revendication 8, présentant en outre :
- une seconde source de fluide (MQ2) qui peut être reliée à l'au moins un dispositif de nettoyage (100) par l'intermédiaire d'une seconde conduite d'acheminement de fluide (220).

10. Système d'air comprimé (1000) selon la revendication 8 ou 9,
**caractérisé en ce que** le système d'air comprimé (1000) présente au moins une vanne antiretour d'acheminement (164), la vanne antiretour d'acheminement (164) étant disposée dans la première conduite d'acheminement de fluide (210) et/ou dans la première conduite de source (408), la vanne antiretour d'acheminement (164) bloquant la conduite (164, 210) pour du fluide refluant dans le sens opposé au sens de transport de la première source de fluide et/ou une pression d'approvisionnement (PV) étant maintenue dans la première conduite (164, 210).

11. Véhicule (800) comportant un système d'air comprimé (1000) selon l'une des revendications 8 à 10.

12. Véhicule (800) selon la revendication 11, **caractérisé en ce que,** dans le système d'air comprimé (1000), la première source de fluide (MQ1) sert à un autre but primaire et/ou à l'approvisionnement d'une installation de suspension pneumatique (901) ou d'une installation pneumatique similaire (910) dans le véhicule (800).

13. Véhicule (800) selon l'une des revendications 11 ou 12,
**caractérisé en ce que,** dans le système d'air comprimé (1000), la seconde source de fluide (MQ2) sert à un autre but primaire et/ou à l'approvisionnement d'une installation de nettoyage de vitres (922) ou d'une installation de nettoyage similaire (920) dans le véhicule (800).

14. Véhicule (800) selon l'une des revendications 11 à 13,
**caractérisé en ce que,** dans le système d'air comprimé (1000), la première source de fluide (MQ1) présente un agencement de compresseur (400) et/ou un accumulateur d'air comprimé (440), en particulier l'agencement de compresseur (400) est disposé dans l'accumulateur d'air comprimé (440).

15. Procédé de nettoyage permettant de nettoyer une surface (O), comportant un dispositif de nettoyage (100) selon l'une des revendications 1 à 7, pour l'exposition de manière sélective d'une surface (O) à l'action d'une séquence de fluides (MS) constituée d'au moins un premier fluide (M1), en particulier gazeux, et d'un second fluide (M2), en particulier liquide, le procédé présentant les étapes suivantes :
- chargement d'un accumulateur haute pression (140) d'un premier fluide (M1), en particulier d'air (M1.1) ;
- maintien d'une pression d'accumulateur (PS) dans l'accumulateur haute pression (140), en particulier par la commutation de la vanne de commutation (160) dans une position de chargement (160.1) ;
- exposition de la surface (O) à l'action d'un second fluide (M2), en particulier de l'eau (M2.1) ou d'un agent de nettoyage (M2.2) ; et/ou
- exposition de la surface (O) à l'action du premier fluide (M1, M1.1), en particulier par la commutation de la vanne de commutation (160) dans une position de desserrage (160.2).

16. Procédé de nettoyage selon la revendication 15, **caractérisé en ce que** l'exposition de la surface (O) à l'action du second fluide (M2, M2.1, M2.2) et l'exposition de la surface (O) à l'action du premier fluide (M1, M1.1) sont effectuées de manière commandée dans le temps, en particulier par alternance et/ou par interm ittence.
